# FASCICULE DE BREVET EUROPEEN

(11) **EP 2 168 176 B1**
(45) Date de publication et mention de la délivrance du brevet: **22.04.2015**
(21) Numéro de dépôt: 08805972.0
(22) Date de dépôt: 11.06.2008
(51) Int. Cl.: H02S 30/20, F24J 2/46, F24J 2/52, F24J 2/54

(54) **PANNEAU SOLAIRE ANTI CYCLONIQUE**
ANTIZYKLONISCHER SONNENKOLLEKTOR
ANTICYCLONIC SOLAR PANEL

(30) Priorité: 11.06.2007 FR 0755648
(43) Date de publication de la demande: 31.03.2010
(73) Titulaire: Gaddarkhan, Jacques, 97111 Morne A L'eau (FR)
(72) Inventeur: Gaddarkhan, Jacques, 97111 Morne A L'eau (FR)
(74) Mandataire: Pontet Allano & Associes
(86) Numéro de dépôt international: PCT/FR2008/051037
(87) Numéro de publication internationale: WO 2008/152342

(56) Documents cités:
- FR-A- 2 532 727
- FR-A- 2 535 033
- US-A- 6 123 067
- US-A1- 2003 062 037

## Description

La présente invention se rapporte à un système de réception d'énergie solaire comprenant un panneau solaire doté d'une face active et au moins un montant pour porter ce panneau solaire. Elle trouve une application particulièrement intéressante dans le domaine de panneaux solaires photovoltaïques industriels de grande dimension, plusieurs centaines de m² de superficie, mais elle peut également s'appliquer à tout type de panneau solaire porté par un montant et subissant parfois des agressions climatiques.

Un panneau solaire est destiné à capter une partie du rayonnement solaire pour le convertir en énergie solaire utilisable. Le panneau solaire est essentiellement de type thermique, conversion du rayonnement solaire en chaleur, ou de type photovoltaïque, conversion du rayonnement solaire en énergie électrique. De nombreuses applications domestiques et industrielles sont envisageables.

Généralement, les panneaux solaires sont disposés à l'extérieur de façon à capter directement un maximum de rayonnement solaire. Cependant, dans les panneaux photovoltaïques par exemple, les cellules photovoltaïques faisant face au soleil sont extrêmement fragiles et doivent être protégées contre les intempéries. Dans les régions où des cyclones et ouragans sont fréquents, le déploiement de panneaux solaires est sérieusement remis en cause puisque les vents violents sont susceptibles de détériorer de manière irréversible les cellules photovoltaïques.

La présente invention a pour but un système permettant de protéger les panneaux solaires en cas d'intempérie, notamment en cas de vents violents.

Un autre but de l'invention est de réaliser une protection automatique.

On atteint au moins l'un des objectifs précités avec un système de réception d'énergie solaire comprenant un panneau solaire doté d'une face active et au moins un montant pour porter ce panneau solaire. Selon l'invention, le panneau solaire est relié au montant de façon pivotante et ce montant comprend au moins une articulation apte à placer la face active du panneau solaire dans une position de protection en réponse à une consigne.

Avec le système selon la présente invention, en cas d'une consigne de protection, le système organise la protection de la face fragile du panneau solaire qui est la face active portant notamment les cellules photovoltaïques lorsqu'il s'agit d'un panneau solaire photovoltaïque. La combinaison du montant articulé avec le caractère pivotant permet de déplacer le panneau solaire afin de le placer dans une position de protection prédéterminée. Cette position de protection dépend notamment du danger contre lequel on souhaite protéger le panneau. Typiquement, dans des régions à risque comme la zone tropicale où l'on peut rencontrer des cyclones et des tornades, la position de protection doit permettre à la face active du panneau solaire de ne pas subir les dégâts d'un vent violent.

Avantageusement, la position de protection consiste à placer la face active du panneau solaire parallèlement et face au sol. De préférence, on place alors la face active du panneau solaire à moins d'un mètre du sol. A titre d'exemple, on peut placer la face active à environ 50cm du sol. On estime qu'avec une telle position, la face active est protégée des vents violents. Bien entendu, la face exposée au vent est conçue en des matériaux suffisamment solides pour résister aux vents violents : acier ou plastique dur et léger notamment. Cette face « non active » aux rayons solaires, doit également protéger le reste du panneau solaire contre la chute d'objets indésirables.

L'homme du métier comprendra aisément que la position de protection dépend du danger à combattre et du type de panneau solaire.

Selon une caractéristique avantageuse de l'invention, le montant comporte deux bras, un bras inférieur fixé au sol et un bras supérieur pivotant par rapport au bras inférieur et selon un axe horizontal, le bras supérieur portant le panneau solaire sur son extrémité libre. Le bras comporte donc deux parties avec une seule articulation, mais on peut bien entendu prévoir plusieurs articulations en fonction du type de panneau utilisé et de la position de protection visée. L'articulation peut comprendre différents éléments : pivot, rotule, téléscopique,...

Avec un bras en deux parties, la rotation du bras supérieur est réalisée au moyen d'un vérin hydraulique. Le bras est donc capable de se plier afin d'emmener le panneau solaire vers le sol. Contrairement aux systèmes actuels où les montants sont des poteaux fixes, la présente invention propose un montant pliable par vérin hydraulique en fonction du climat.

Selon un mode de réalisation préféré de l'invention, le vérin hydraulique est muni d'un piston associé à deux biellettes. La base du vérin est fixée au sol, directement ou via le bras inférieur. La première biellette est fixée au bras supérieur et la seconde biellette est fixée au bras inférieur. De cette manière, le mouvement de pivot ou de basculement du bras supérieur peut se faire de manière complètement contrôlée.

Selon un mode de réalisation de l'invention, le bras supérieur effectue une rotation de sensiblement 150° pour placer le panneau solaire en position de protection.

Avantageusement, la consigne est générée lorsque la vitesse du vent dépasse un seuil prédéterminé. Ce seuil est prédéterminé en fonction des caractéristiques techniques, notamment de résistance, du panneau solaire et du montant. A titre d'exemple non limitatif, ce seuil peut être compris entre 120 et 160km/h. Avantageusement, la consigne peut être générée en fonction non seulement de la vitesse du vent mais également de la direction du vent.

D'autres éléments climatiques, pris isolément ou en combinaison, peuvent également faire l'objet d'une surveillance susceptible de générer la consigne de repli. Ces éléments peuvent comprendre : la pluie, la neige, la grêle, le feu, la poussière, ...

De préférence, le système selon la présente invention comprend une unité de traitement associée à des capteurs climatiques, cette unité de traitement étant apte à générer ladite consigne en fonction de données provenant desdits capteurs. Cette unité de traitement peut être de type micro-ordinateur doté de composants nécessaires et conventionnels pour commander le vérin et communiquer avec des centres distants de manière filaire ou sans fil. Ce micro-ordinateur peut être programmé pour opérer le repli à des instants prédéterminés en fonction notamment de prévisions météorologiques. Il est également capable de remettre le panneau solaire en position de fonctionnement lorsque le danger est écarté.

Selon une caractéristique avantageuse de l'invention, la liaison pivotante entre le panneau solaire et le montant comporte une motorisation orientant le panneau solaire continument sensiblement face au soleil sur environ 180° par rapport à un axe de rotation horizontal. Il s'agit d'un processus de poursuite pour maximiser le rendement du panneau solaire. Avantageusement et contrairement à l'art antérieur ce processus de poursuite s'effectue par rotation selon un axe horizontal, ce qui permet d'associer le processus de repli à ce processus de poursuite.

D'autres avantages et caractéristiques de l'invention apparaîtront à l'examen de la description détaillée d'un mode de mise en oeuvre nullement limitatif, et des dessins annexés, sur lesquels :
La figure 1 est une vue de face schématique du système selon la présente invention ;
La figure 2 est une vue schématique illustrant le mode de poursuite de la course du soleil selon la présente invention ;
La figure 3 est une vue du système pour lequel la face active du panneau solaire est face au soleil ;
La figure 4 est une vue schématique du système illustrant le début du processus de repli du panneau solaire ; la face active étant face au sol ;
La figure 5 est une vue schématique du système lors du processus de repli du panneau solaire ; les montants étant pliés à 90°; et
La figure 6 est une vue schématique du système lors du processus de repli du panneau solaire ; les montants étant pliés à 146°.

Bien que l'invention n'y soit pas limitée, on va maintenant décrire le système selon la présente invention pour un panneau solaire photovoltaïque de grande dimension, ce système étant équipé de deux montants pliables en fonction de la vitesse du vent.

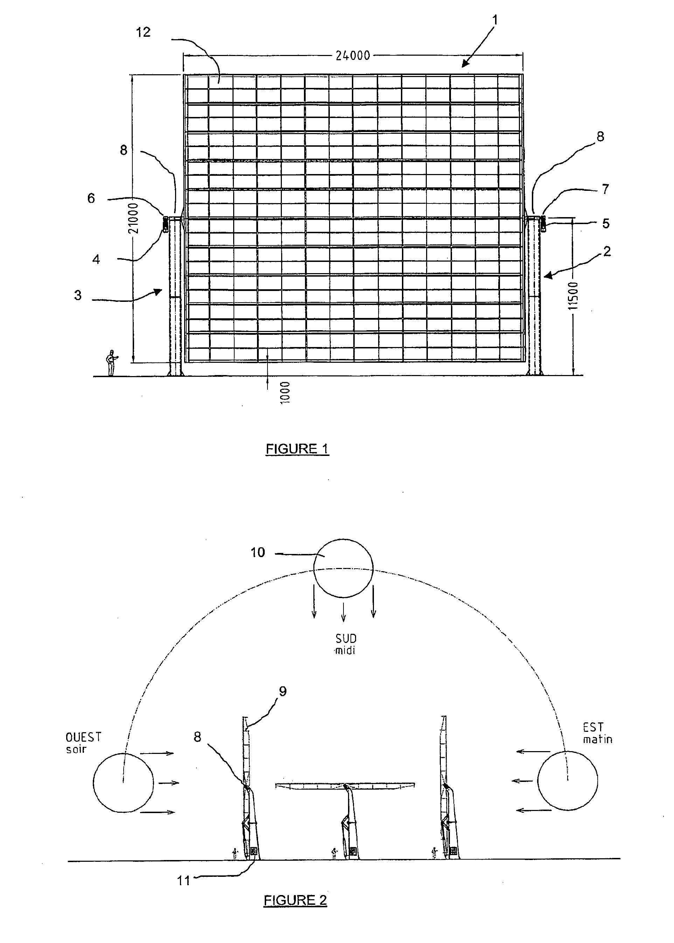

Sur la figure 1, on voit un panneau solaire 1 porté par deux montants 2, 3 solidement fixés au sol. Le panneau solaire 1 présente un dimensionnement de 24m de large et 21m de haut. Ceci autorise une surface active de 504m². La surface active (comme on le verra sur les figures suivantes) est celle qui comprend les cellules photovoltaïques 12. C'est la surface qui doit faire face au soleil afin de capter le maximum d'énergie. La production de l'énergie électrique est obtenue à partir de ces cellules photovoltaïques 12. Un panneau solaire 1 comme représenté sur la figure 1 présente une puissance nominale d'environ 60kVA.

Les montants ont une hauteur de 11,5m. En position verticale, le panneau solaire est porté par les montants en laissant un espace de 1m avec le sol. Les deux montants portent le panneau solaire par un arbre 8 solidaire de ce panneau solaire 1 et ayant une extrémité à chaque flan latéral de ce panneau solaire. Le panneau solaire 1 peut effectuer une rotation complète entre les deux montants 2, 3.

Chaque montant est équipé à son extrémité supérieur d'un moteur 4, 5 associé à un palier 6, 7. Las paliers accueillent l'arbre 8 constituant l'axe de rotation du panneau solaire 1. L'arbre 8 est fermement solidaire du panneau solaire 1 de telle sorte que la rotation de cet arbre 8 entraine automatiquement la rotation du panneau solaire 1. L'arbre 8 forme un axe horizontal situé à 11,5m du sol, au milieu du panneau solaire.

Sur la figure 2, le panneau est conçu à partir de onze poutrelles 4 reliées entre elles par deux longerons (non représentés). L'arbre 8 est confondu avec l'axe de rotation situé au centre des longerons.

Un panneau solaire capte le maximum d'énergie lumineuse lorsqu'il est sensiblement perpendiculaire aux rayons du soleil. Pour assurer un rendement maximum depuis le lever jusqu'au coucher du soleil, le panneau solaire selon la présente invention est apte à poursuivre le mouvement du soleil à l'aide des moteurs 4 et 5. Chaque ensemble moteur 4, 5 et palier 6, 7 respectivement constitue un motoréducteur apte à faire pivoter le panneau solaire 1. Le dispositif de poursuite (« tracking » en langue anglaise) de la présente invention s'effectue avec un axe de rotation horizontal contrairement aux systèmes actuels de poursuite. La figure 2 illustre trois positionnements du panneau solaire 1 lors du processus de poursuite. A chaque instant le panneau solaire 1 reste face au soleil 10 qui se déplace tout au long de la journée. Ainsi, au cours de la journée, le panneau solaire 1 effectue quasiment une rotation de 180°, entre l'EST et l'OUEST.

En particulier, le processus de poursuite est commandé par une unité de traitement 11 disposée notamment au sein d'un des deux montants. Cette unité de traitement intègre un programme logiciel de pilotage apte à orienter le panneau solaire 1 en fonction de l'heure d la journée.

La présente invention est notamment remarquable par le fait qu'elle propose un système permettant de garantir la sécurité du panneau solaire en cas de fort vent. En effet, lorsque le panneau solaire 1 est disposé dans une région tropicale et cyclonique par exemple, le système anti cyclonique selon l'invention assure la protection du panneau solaire dès que le vent atteint une vitesse de 120km/h. Pour ce faire, on prévoit par exemple des girouettes et anémomètres (non représentés) pour mesurer la direction et la vitesse du vent. Ces capteurs sont avantageusement reliés à l'unité de traitement 11 qui peut générer une consigne de repli lorsque des critères (par exemple 120km/h pour la vitesse) sont atteints. La consigne de repli ou de protection déclenche un processus de protection du panneau 1. Plus précisément, il s'agit de protéger la face active qui comporte des éléments fragiles que sont les cellules photovoltaïques 12.

L'unité de traitement 11 reçoit des données à partir des capteurs aérodynamiques et génère la consigne de repli le cas échéant. Mais, l'unité de traitement peut également générer la consigne de repli à partir d'un programme pré-enregistré à la suite d'une analyse météorologique. L'unité de traitement est apte à maintenir le panneau dans sa position de protection pour des durées prédéterminées et elle est également apte à remettre le panneau solaire dans sa position de fonctionnement normal.

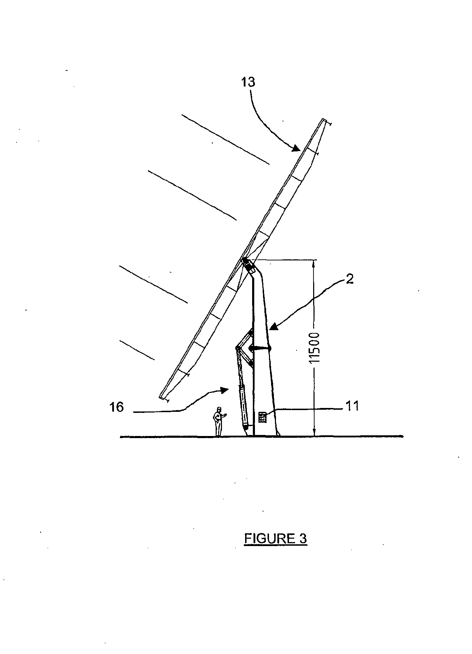

Sur les figures 3 à 6 on voit différentes étapes du processus de repli. Sur la figure 3, le panneau solaire 1 est en position de fonctionnement normal, c'est-à-dire que la face active 13 comportant les cellules photovoltaïques 12 fait face au soleil.

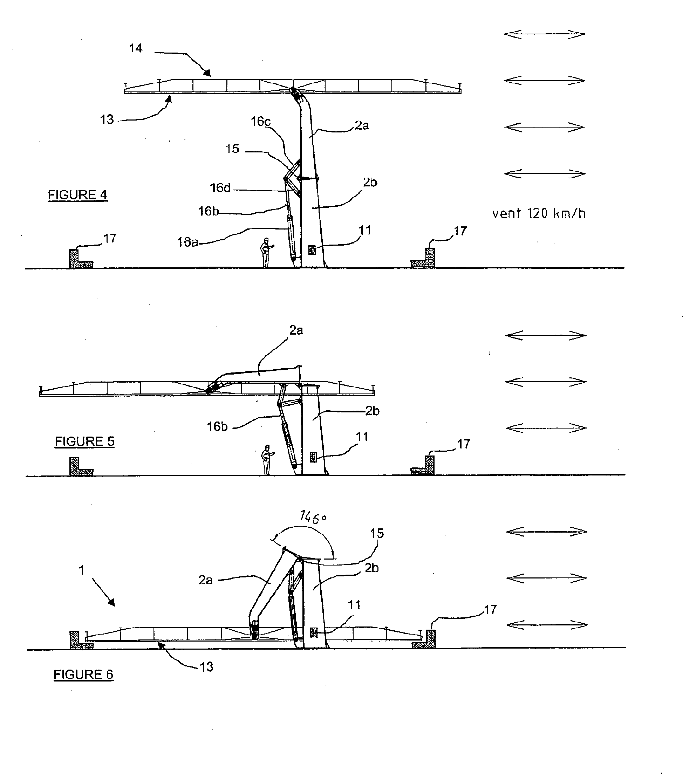

Sur la figure 4, l'unité de traitement 11 a généré une consigne de repli. Les motoréducteurs 4,6 et 5,7 entrainent l'arbre 8 en rotation ainsi que le panneau solaire 1, jusqu'à avoir la face active 13 face (parallèle) au sol. En fait, le processus de poursuite est interrompu et les motoréducteurs utilisés pour ce processus de poursuite permettent de faire pivoter le panneau solaire 1 et de le maintenir dans cette position pendant toute la phase de protection. La position de protection consiste à disposé le panneau solaire dans une position permettant de minimiser les forces induites par le vent. Par ailleurs, la face arrière 14 du panneau solaire 1 est conçue avec des matériaux suffisamment solides tels que des tôles ou du plastique dur pour protéger les éléments internes du panneau solaire.

Pour maximiser la protection, chaque montant 2, 3 est articulé. Chaque montant 2, 3 est conçu en deux parties : un bras supérieur 2a et un bras inférieur 2b fixe ; les deux bras étant reliés par un pivot 15. Ce pivot 15 est tel que le bras supérieur 2a est apte à pivoter par rapport au bras inférieur 2b selon un axe horizontal. L'axe du pivot 15 est situé à l'extérieur des deux bras inférieur et supérieur.

Sur la figure 5, le processus de repli se poursuit. Le bras supérieur 2a est mis en rotation par un vérin hydraulique 16 commandé par l'unité de traitement 11. Ce vérin hydraulique 16 comprend une base 16a fixée au pied du montant et au sol, un piston 16b relié de façon pivotante à deux biellettes 16c et 16d. La première biellette 16c est reliée de façon pivotante au bras supérieur 2a. La seconde biellette 16d est reliée de façon pivotante au bras inférieur 2b.

En fonctionnement normal, le piston 16b est déployé, le bras supérieur 2a repose sur le bras inférieur 2b. Pendant le processus de repli, le piston 16b est rappelé progressivement à l'intérieur de la base 16a, ce qui entraine la rotation lente du bras supérieur 2a par rapport au bras inférieur 2b. Les processus de repli et de déploiement peuvent durer plusieurs centaines de secondes, typiquement 224 secondes pour le repli et 330 secondes pour le déploiement.

Durant tout le processus de repli, les motoréducteurs 4,6 et 5,7 continuent de maintenir la face active 13 du panneau solaire 1 face au sol.

Sur la figure 6 le processus de repli prend fin. Le piston 16b a été complètement rappelé au sein de la base 16a. Le bras supérieur 2a a effectué une rotation d'environ 146°, ce qui permet de ramener la face active 13 du panneau solaire 1 à environ 50cm du sol.

Le panneau solaire 1 est maintenu dans cette position de protection pendant toute la période où les vents sont violents.

L'unité de traitement 11 est programmée de façon à gérer automatiquement le repli et le déploiement du panneau solaire. Dans ce cas, chaque montant comporte une pompe hydraulique commandée par l'unité de traitement et apte à alimenter le vérin hydraulique. On peut également envisager une seule pompe hydraulique alimentant plusieurs montants. L'unité de traitement contrôle en permanence les caractéristiques du vent de façon à agir de façon autonome.

Dans un autre mode de réalisation de l'invention, non automatisé pour limiter les coûts, on peut prévoir une pompe hydraulique mobile que l'on déplace auprès de chaque vérin hydraulique afin d'alimenter ce dernier. Dans certaines régions tropicales, il existe des alertes cycloniques. A titre d'exemple, on peut replier le panneau solaire lors d'une alerte cyclonique de niveau 1, c'est-à-dire une vitesse du vent égale à environ 100 km/h.

En complément de tout ce qui précède, on peut prévoir une bordure (17) en béton ou autre, réalisée au sol, d'une hauteur supérieure à 50cm par exemple, et formant un logement dans lequel le panneau solaire vient s'encastrer en position de protection. Cela permet de maximiser la protection. Cette bordure (17) peut être un logement de forme carrée avec des dimensions légèrement supérieures à celles du panneau solaire. La section de cette bordure peut être carrée ou de forme « L » comme représentée sur les figures 4 à 6. On peut prévoir une matière souple (non représentée) placée dans le « L » et prévue pour que le panneau solaire vienne se poser dessus sans danger.

Les montants 2,3 sont dimensionnés en fonction des charges qui s'appliquent, par exemple :
- le poids du panneau solaire, typiquement de l'ordre de 7000 kg,
- la force d'un vent de 120 km/h sur le panneau, typiquement 60000 kg de poussée, et
- le déplacement du centre de gravité lors du processus de repli.

Avantageusement, les montants 2, 3 sont scellés dans une structure en béton réalisée au sol. Cette structure en béton est convenablement dimensionnée pour supporter la charge et les pressions exercées par les montants.

La présente invention propose donc notamment un système anti cyclonique par vérin hydraulique asservi à un contrôle automatique de la force et de la direction du vent. En cas de vent fort, la face fragile du panneau est protégée face au sol.

Bien sûr, l'invention n'est pas limitée aux exemples qui viennent d'être décrits et de nombreux aménagements peuvent être apportés à ces exemples sans sortir du cadre de l'invention.

## Revendications

1. Système de réception d'énergie solaire comprenant un panneau solaire (1) doté d'une face active (13) et au moins un montant (2,3) pour porter ledit panneau solaire (1), **caractérisé en ce que** le panneau solaire est relié au montant de façon pivotante et **en ce que** ce montant comprend au moins une articulation (15) apte à placer la face active du panneau solaire parallèlement et face au sol dans une position de protection en réponse à une consigne.

2. système selon la revendication 1, **caractérisé en ce que** la position de protection consiste à placer la face active (13) du panneau solaire à moins d'un mètre du sol.

3. Système selon l'une quelconque des revendications précédentes, **caractérisé en ce que** le montant (2,3) comporte deux bras, un bras inférieur (2b) fixé au sol et un bras supérieur (2a) pivotant par rapport au bras inférieur et selon un axe horizontal, le bras supérieur (2a) portant le panneau solaire sur son extrémité libre.

4. Système selon la revendication 3, **caractérisé en ce que** la rotation du bras supérieur (2a) est réalisée au moyen d'un vérin hydraulique (16).

5. Système selon la revendication 4, **caractérisé en ce que** le vérin hydraulique (16) est muni d'un piston (16b) associé à deux biellettes ; la base (16a) du vérin étant fixée au sol, la première biellette (16c) étant fixée au bras supérieur (2a) et la seconde biellette (16d) étant fixée au bras inférieur (2b).

6. Système selon l'une quelconque des revendications 3 à 5, **caractérisé en ce que** le bras supérieur (2a) effectue une rotation de sensiblement 150° pour placer le panneau solaire (1) en position de protection.

7. Système selon l'une quelconque des revendications précédentes, **caractérisé en ce que** la consigne est générée lorsque la vitesse du vent dépasse un seuil prédéterminé.

8. Système selon l'une quelconque des revendications précédentes, **caractérisé en ce qu'**il comprend une unité de traitement (11) associée à des capteurs climatiques, cette unité de traitement étant apte à générer ladite consigne en fonction de données provenant desdits capteurs.

9. Système selon l'une quelconque des revendications précédentes, **caractérisé en ce que** la liaison pivotante entre le panneau solaire et le montant comporte une motorisation (4,5,6,7) orientant le panneau solaire (1) continument sensiblement face au soleil sur environ 180° par rapport à un axe de rotation horizontal.

10. Système selon l'une quelconque des revendications précédentes, **caractérisé en ce qu'**en position de repli, le panneau solaire vient s'encastrer dans une bordure (17) réalisée au sol et formant un logement.

## Patentansprüche

1. System zum Empfangen von Sonnenenergie mit einem mit einer aktiven Seite (13) ausgestatteten Solarpaneel(1) und mindestens einem Ständer (2, 3), der das Solarpaneel (1) trägt, **dadurch gekennzeichnet, dass** das Solarpaneel schwenkbar mit dem Ständer aufgenommen ist, und dadurch, dass der genannte Ständer mindestens ein Gelenk (15) umfasst, das die aktive Seite des Solarpaneels parallel zum Boden und zum Boden hin gewandt in eine Schutzstellung als Antwort auf einen Befehl bringen kann.

2. System nach Anspruch 1, **dadurch gekennzeichnet, dass** die Schutzstellung darin besteht, die aktive Seite (13) des Solarpaneels in eine Entfernung vom Boden von weniger als einem Meter zu bringen.

3. System nach einem der vorhergehenden Ansprüche, **dadurch gekennzeichnet, dass** der Ständer (2, 3) zwei Arme umfasst, wobei ein unterer Arm (2b) am Boden verankert ist und ein oberer Arm (2a) schwenkbar zum unteren Arm um eine horizontale Achse aufgenommen ist, wobei der obere Arm (2a) das Solarpaneel an seinem freien Ende trägt.

4. System nach Anspruch 3, **dadurch gekennzeichnet, dass** die Drehung des oberen Arms (2a) mittels eines Hydraulikzylinders (16) erfolgt.

5. System nach Anspruch 4, **dadurch gekennzeichnet, dass** das Hydraulikzylinder (16) von einem mit zwei Stangen verbundenen Kolben (16b) versehen ist; wobei das Fundament (16a) des Zylinders am Boden verankert ist, die erste Stange (16c) am oberen Arm (2a) befestigt ist und wobei die zweite Stange (16d) am unteren Arm (2b) befestigt ist.

6. System nach einem der vorhergehenden Ansprüche 3-5, **dadurch gekennzeichnet, dass** der obere Arm (2a) sich im Wesentlichen um 150° dreht, um das Solarpaneel (1) in Schutzstellung zu bringen.

7. System nach einem der vorhergehenden Ansprüche, **dadurch gekennzeichnet, dass** der Befehl erzeugt wird, wenn die Windgeschwindigkeit einen vorbestimmten Schwellenwert übersteigt.

8. System nach einem der vorhergehenden Ansprüche, **dadurch gekennzeichnet, dass** es eine Verarbeitungseinheit (11) umfasst, die mit Witterungssensoren gekoppelt ist, wobei die genannte Verarbeitungseinheit dafür geeignet ist, den genannten Befehl Daten aus den genannten Sensoren entsprechend zu erzeugen.

9. System nach einem der vorhergehenden Ansprüche, **dadurch gekennzeichnet, dass** die Schwenkverbindung zwischen dem Solarpaneel und dem Ständer einen Motorantrieb (4, 5, 6, 7) umfasst, der das Solarpaneel (1) kontinuierlich im Wesentlichen zur Sonne hin gewandt auf ca. 180° um eine horizontale Drehachse bringt.

10. System nach einem der vorhergehenden Ansprüche, **dadurch gekennzeichnet, dass** in zurückgefahrener Stellung das Solarpaneel in eine als Aufnahmebereich am Boden ausgeführte Randkante(17) einrastet.

## Claims

1. Solar energy reception system comprising a solar panel (1) provided with an active face (13) and at least one upright (2,3) to support said solar panel (1), **characterized in that** the solar panel is linked to the upright in a pivoting manner and **in that** this upright comprises at least one articulation (15) able to place the active face of the solar panel parallel to and facing the ground in a protection position in response to an instruction.

2. System according to claim 1, **characterized in that** the protection position consists of placing the active face (13) of the solar panel at least one metre from the ground.

3. System according to any one of the preceding claims, **characterized in that** the upright (2,3) has two arms, a lower arm (2b) fixed to the ground and an upper arm (2a) pivoting with respect to the lower arm and along a horizontal axis, the upper arm (2a) supporting the solar panel on its free end.

4. System according to claim 3, **characterized in that** the rotation of the upper arm (2a) is carried out by means of a hydraulic cylinder (16).

5. System according to claim 4, **characterized in that** the hydraulic cylinder (16) is equipped with a piston (16b) associated with two connecting rods; the base (16a) of the cylinder being fixed to the ground, the first connecting rod (16c) being fixed to the upper arm (2a) and the second connecting rod (16d) being fixed to the lower arm (2b).

6. System according to any one of claims 3 to 5, **characterized in that** the upper arm (2a) carries out a rotation of approximately 150° to place the solar panel (1) in the protection position.

7. System according to any one of the preceding claims, **characterized in that** the instruction is generated when the wind speed exceeds a predetermined threshold.

8. System according to any one of the preceding claims, **characterized in that** it comprises a processing unit (11) combined with weather sensors, this processing unit being able to generate said instruction as a function of data originating from said sensors.

9. System according to any one of the preceding claims, **characterized in that** the pivoting link between the solar panel and the upright has a motorization (4,5,6,7) continuously orienting the solar panel (1) to substantially face the sun through approximately 180° with respect to a horizontal axis of rotation.

10. System according to any one of the preceding claims, **characterized in that** in the folded position the solar panel is fitted into a curb (17) realized on the ground and forming a housing.
